(19) Europäisches Patentamt / European Patent Office / Office européen des brevets

(11) **EP 2 955 712 A1**

(12) **EUROPEAN PATENT APPLICATION**

(43) Date of publication:
16.12.2015 Bulletin 2015/51

(51) Int Cl.:
*G09G 5/02* (2006.01)

(21) Application number: 15171341.9

(22) Date of filing: 10.06.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 11.06.2014 US 201462010707 P
04.07.2014 KR 20140083962

(71) Applicant: **Samsung Electronics Co., Ltd
Gyeonggi-do 443-742 (KR)**

(72) Inventors:
• BAE, Jong-Kon
443-742 Gyeonggi-do (KR)
• BOTZAS, Anthony
San Jose, CA California 95124 (US)
• HAN, Dong-Kyoon
443-742 Gyeonggi-do (KR)

(74) Representative: **Jenkins, Richard Gavin
HGF Limited
Saviour House
9 St Saviourgate
York YO1 8NQ (GB)**

(54) **IMAGE PROCESSING APPARATUS AND METHOD**

(57) An image processing apparatus and an image-processing method are provided. The image processing method includes encoding an image according to a first encoding type, encoding the image, which has been encoded according to the first encoding type, according to a second encoding type, and decoding the image, which has been encoded according to the second encoding type, in which the second encoding type is contrast dependent encoding (CDE) which is dependent on a contrast of the image.

FIG.3

**Description**

TECHNICAL FIELD

The present disclosure relates to an image processing apparatus and method.

BACKGROUND

With the current release of smartphones or tablet Personal Computers (PCs) having ultra-high resolution display modules equivalent to High-Definition Televisions (HDTVs) in the market, mobile displays have evolved to Wide Video Graphics Array (WVGA)-class or full-HD class displays.

In line with this, a display driving circuit needs to process an increasing amount of data, the amount of electrical current used in the driving circuit is also increasing. For example, increases in a frame rate and a resolution in a flat panel display device increase the amount of data to be processed. As the size of an image increases, the amount of data to be transmitted also increases in image transmission.

The increase in the amount of image data to be transmitted causes the excessive use of memory resources and increases the amount of power consumption.

The above information is presented as background information only to assist with an understanding of the present disclosure. No determination has been made, and no assertion is made, as to whether any of the above might be applicable as prior art with regard to the present disclosure.

SUMMARY

Aspects of the present disclosure are to address at least the above-mentioned problems and/or disadvantages and to provide at least the advantages described below. Accordingly, an aspect of the present disclosure is to provide an image processing apparatus and a method for controlling the image processing apparatus, in which a predetermined image is encoded using a Contrast Dependent Encoding (CDE) scheme, which depends on a contrast of the image and a pentile encoding scheme, or using the CDE scheme, and data regarding the image is transmitted, thereby reducing the amount of data transmission and preventing the unnecessary use of memory resources.

In accordance with an aspect of the present disclosure, an image processing method is provided. The image processing method includes encoding an image according to a first encoding type, encoding the image, which has been encoded according to the first encoding type, according to a second encoding type, and decoding the image, which has been encoded according to the second encoding type, in which the second encoding type is CDE which is dependent on a contrast of the image.

In accordance with another aspect of the present disclosure, an image processing apparatus is provided. The image processing apparatus includes a processor configured to encode an image according to a first encoding type, to encode the image, which has been encoded according to the first encoding type, according to a second encoding type, and to decode the image, which has been encoded according to the second encoding type and a display module configured to display the decoded image, in which the second encoding type is CDE which is dependent on a contrast of the image.

In accordance with another aspect of the present disclosure, an image processing method is provided. The image processing method includes encoding an image according to a predetermined encoding scheme, storing the encoded image in a frame buffer, and decoding the encoded image, in which the predetermined encoding scheme is CDE which depends on a contrast of the image.

Other aspects, advantages, and salient features of the disclosure will become apparent to those skilled in the art from the following detailed description, which, taken in conjunction with the annexed drawings, discloses various embodiments of the present disclosure.

BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 conceptually illustrates a network environment including an electronic device to which an image processing apparatus or method according to various embodiments of the present disclosure;
FIG. 2 is a block diagram of an image control module of an electronic device according to various embodiments of the present disclosure;
FIG. 3 is a diagram for describing at least one function or at least one operation of an image processing apparatus according to an embodiment of the present disclosure;

FIG. 4 is a flowchart illustrating an image processing method according to an embodiment of the present disclosure;

FIG. 5 is a flowchart illustrating at least one function or at least one operation of pentile encoding performed by a pentile processing module according to an embodiment of the present disclosure;

FIGS. 6A, 6B, and 7 are diagrams for describing at least one function or at least one operation of CDE performed by a CDE processing module according to various embodiments of the present disclosure;

FIG. 8 is a diagram for describing at least one function or at least one operation in which encoded pixels are decoded by a decoding module according to an embodiment of the present disclosure;

FIG. 9 is a diagram for describing at least one function or at least one operation of an image processing apparatus according to an embodiment of the present disclosure;

FIG. 10 is a diagram for describing at least one function or at least one operation of an image processing apparatus according to an embodiment of the present disclosure;

FIG. 11 is a diagram for describing at least one function or at least one operation of an image processing apparatus according to an embodiment of the present disclosure;

FIGS. 12A, 12B, 12C, 13, 14A, 14B, 14C, 14D, 14E, 14F, 14G, 14H, 14I, 14J, 14K, 14L, 14M, 14N, 14O, and 15 are diagrams for describing encoding at least one function or at least one operation when a pentile processing module is omitted according to various embodiments of the present disclosure;

FIG. 16 is a diagram for describing decoding at least one function or at least one operation when a pentile processing module is omitted according to various embodiments of the present disclosure;

FIG. 17 is a block diagram of an electronic device to which an image processing apparatus or method according to various embodiments of the present disclosure; and

FIG. 18 is a ladder diagram illustrating a communication protocol between a plurality of electronic devices according to various embodiments of the present disclosure.

Throughout the drawings, like reference numerals will be understood to refer to like parts, components, and structures.

## DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include" or "may include" used in the various embodiments of the present disclosure indicates the presence of disclosed corresponding functions, operations, elements, and the like, and does not limit additional one or more functions, operations, elements, and the like. In addition, it should be understood that the term "include" or "has" used in the various embodiments of the present disclosure is to indicate the presence of features, numbers, operations, elements, parts, or a combination thereof described in the specifications, and does not preclude the presence or addition of one or more other features, numbers, operations, elements, parts, or a combination thereof.

The term "or" or "at least one of A or/and B" used in the various embodiments of the present disclosure includes any and all combinations of the associated listed items. For example, the term "A or B" or "at least one of A or/and B" may include A, B, or all of A and B.

Although the terms such as "first" and "second" used in the various embodiments of the present disclosure may modify various elements of the various embodiments, these terms do not limit the corresponding elements. For example, these terms do not limit an order and/or importance of the corresponding elements. These terms may be used for the purpose of distinguishing one element from another element. For example, a first user device and a second user device all indicate user devices or may indicate different user devices. For example, a first element may be named as a second element without departing from the right scope of the various embodiments of the present disclosure, and similarly, a second element may be named as a first element.

It will be understood that when an element is "connected" or "coupled" to another element, the element may be directly connected or coupled to the other element, and there may be another new element between the element and the another element. To the contrary, it will be understood that when an element is "directly connected" or "directly coupled" to another element, there is no other element between the element and the another element.

The terms used in the various embodiments of the present disclosure are for the purpose of describing particular embodiments only and are not intended to be limiting.

All of the terms used herein including technical or scientific terms have the same meanings as those generally understood by an ordinary skilled person in the related art unless they are defined otherwise. The terms defined in a generally used dictionary should be interpreted as having the same meanings as the contextual meanings of the relevant technology and should not be interpreted as having ideal or exaggerated meanings unless they are clearly defined in the various embodiments of the present disclosure.

An electronic device according to various embodiments of the present disclosure may be a device including a fingerprint function or a communication function. For example, the electronic device may be a combination of one or more of a smart phone, a tablet Personal Computer (PC), a mobile phone, a video phone, an electronic book (e-book) reader, a desktop PC, a laptop PC, a netbook computer, a Personal Digital Assistant (PDA), a Portable Multimedia Player (PMP), a Motion Picture Experts Group (MPEG -1 or MPEG-2) Audio Layer III (MP3) player, mobile medical equipment, an electronic bracelet, an electronic necklace, an electronic appcessory, a camera, a wearable device (e.g., a Head-Mounted Device (HMD) such as electronic glasses), an electronic cloth, an electronic bracelet, an electronic necklace, an electronic appcessory, an electronic tattoo, and a smart watch.

According to various embodiments of the present disclosure, the electronic device may be a smart home appliance having a communication function. The electronic device may include, for example, a Television (TV), a Digital Versatile Disc (DVD) player, audio equipment, a refrigerator, an air conditioner, a vacuum cleaner, an oven, a microwave oven, a laundry machine, an air cleaner, a set-top box, a TV box (e.g., HomeSync™ of Samsung, TV™ of Apple, or TV™ of Google), a game console, an electronic dictionary, an electronic key, a camcorder, and an electronic frame.

According to various embodiments of the present disclosure, the electronic device may include at least one of various medical equipment (e.g., Magnetic Resonance Angiography (MRA), Magnetic Resonance Imaging (MRI), Computed Tomography (CT), an imaging device, or an ultrasonic device), a navigation system, a Global Positioning System (GPS) receiver, an Event Data Recorder (EDR), a Flight Data Recorder (FDR), a vehicle infotainment device, electronic equipment for ships (e.g., navigation system and gyro compass for ships), avionics, a security device, a vehicle head unit, an industrial or home robot, an Automatic Teller's Machine (ATM), and a Point of Sales (POS).

According to various embodiments of the present disclosure, the electronic device may include a part of a furniture or building/structure having a communication function, an electronic board, an electronic signature receiving device, a projector, and various measuring instruments (e.g., a water, electricity, gas, or electric wave measuring device). The electronic device according to various embodiments of the present disclosure may be one of the above-listed devices or a combination thereof. The electronic device according to various embodiments of the present disclosure may be a flexible device. It will be obvious to those of ordinary skill in the art that the electronic device according to various embodiments of the present disclosure is not limited to the above-listed devices.

Hereinafter, an electronic device according to various embodiments of the present disclosure will be described with reference to the accompanying drawings. Herein, the term "user" used in various embodiments of the present disclosure may refer to a person who uses the electronic device or a device using the electronic device (e.g., an artificial intelligence electronic device).

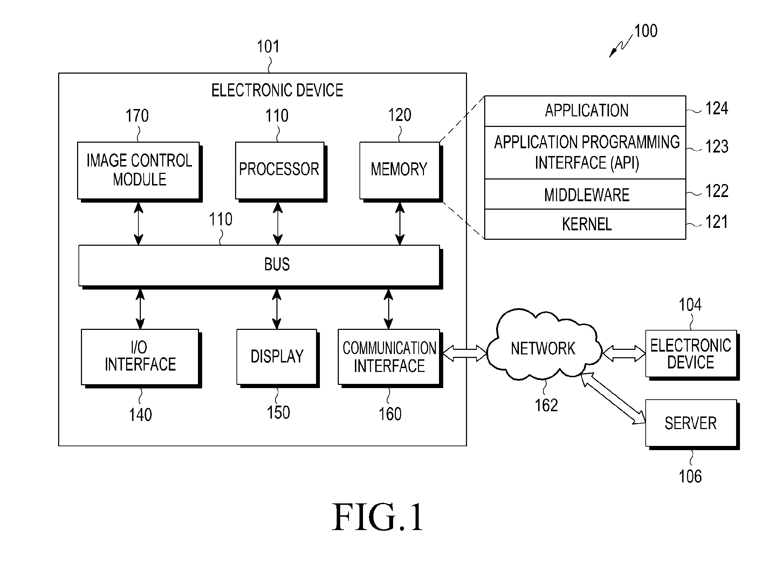

FIG. 1 conceptually illustrates a network environment 100 including an electronic device to which an image processing apparatus or method according to various embodiments of the present disclosure.

Referring to FIG. 1, an electronic device 101 may include a bus 130, a processor 110, a memory 120, an Input/Output (I/O) interface 140, a display 150, a communication interface 160, and an image control module 170.

The bus 130 may include a circuit for interconnecting the foregoing components and delivering communication (e.g., a control message) among the components.

The processor 110 may receive a command from the foregoing other components (e.g., the memory 120, the I/O interface 140, the display 150, the communication interface 160, or the image control module 170) through the bus 130, interprets the received command, and executes an operation or data processing according to the interpreted command.

The memory 120 may store commands or data received from the processor 110 or other components (e.g., the I/O interface 140, the display 150, the communication interface 160, and/or the image control module 170) or generated by the processor 110 or other components. The memory 120 may include programming modules, for example, a kernel 121, middleware 122, an Application Programming Interface (API) 123, or an application 124. Each of the foregoing programming modules may be configured with software, firmware, or hardware, or a combination of at least two of them.

The kernel 121 controls or manages system resources (e.g., the bus 130, the processor 110, and/or the memory 120) used to execute an operation or a function implemented in other programs (e.g., the middleware 122, the API 123, or the application 124). The kernel 121 provides an interface through which the middleware 122, the API 123, or the application 124 accesses separate components of the electronic device 101 to control or manage the system resources.

The middleware 122 may work as an intermediary for allowing, for example, the API 123 or the application 124 to exchange data in communication with the kernel 121. In regard to task requests received from the application 124, the middleware 122 performs control (e.g., scheduling or load balancing) with respect to the task requests, for example, by giving at least one of the applications 124 priorities for using a system resource (e.g., the bus 130, the processor 110, and/or the memory 120) of the electronic device 101.

The API 123 is an interface used for the application 124 to control a function provided by the kernel 121 or the middleware 122, and may include, for example, at least one interface or function (e.g., a command) for file control, window control, image processing or character control.

According to various embodiments of the present disclosure, the application 124 may include a Short Message Service (SMS)/Multimedia Messaging Service (MMS) application, an e-mail application, a calendar application, an alarm application, a healthcare application (e.g., an application for measuring an exercise volume or a blood sugar level), or an environment information application (e.g., an application for providing air pressure, humidity, or temperature information). Additionally or alternatively, the application 124 may be an application associated with information exchange between the electronic device 101 and an external electronic device 104. The application associated with information exchange may include a notification relay application for relaying particular information to the external electronic device or a device management application for managing the external electronic device.

For example, the notification relay application may include a function of relaying notification information generated in another application (e.g., the SMS/MMS application, the e-mail application, the healthcare management application, or the environment information application) of the electronic device 101 to the external electronic device 104. Additionally or alternatively, the notification relay application may, for example, receive notification information from the external electronic device 104 and provide the notification information to a user. The device management application may manage (e.g., install, delete, and/or update) a function of at least a part of the external electronic device 104 communicating with the electronic device 101 (e.g., turn-on/turn-off of the external electronic device (or a part thereof) or brightness (or resolution) adjustment of the display), an application operating on the external electronic device 104, and/or a service (e.g., a call service or a message service) provided on the external electronic device 104.

According to various embodiments of the present disclosure, the application 124 may include an application designated according to an attribute (e.g., a type) of the external electronic device 104. For example, if the external electronic device 104 is an MP3 player, the application 124 may include an application associated with music playback. Similarly, if the external electronic device 104 is a mobile medical device, the application 124 may include an application associated with healthcare. According to various embodiments of the present disclosure, the application 124 may include at least one of an application designated in the electronic device 101 and an application received from another electronic device (e.g., a server 106 or the external electronic device 104).

The I/O interface 140 delivers a command or data input from a user through an input/output device (e.g., a sensor, a keyboard, or a touch screen) to the processor 110, the memory 120, the communication interface 160, or the image control module 170 through, for example, the bus 130. For example, the I/O interface 140 may provide data corresponding to a user's touch input through the touch screen to the processor 110. The I/O interface 140 may output a command or data, which is received from the processor 110, the memory 120, the communication interface 160, or the image control module 170 through the bus 130, through an I/O device (e.g., a speaker or a display). For example, the I/O interface 140 may output audio data processed through the processor 110 to the user through the speaker.

The display 150 may display various information (e.g., multimedia data, text data, and the like) to users.

The communication interface 160 sets up communication, for example, between the electronic device 101 and an external device (e.g., a first external electronic device 104 or the server 106). For example, the communication interface 160 is connected to a network 162 through wireless or wired communication to communicate with the external device 104.

The wireless communication may use at least one of Wi-Fi, Bluetooth (BT), Near Field Communication (NFC), a GPS, or cellular communication (e.g., Long Term Evolution (LTE), LTE-Advanced (LTE-A), Code Division Multiple Access (CDMA), Wideband CDMA (WCDMA), a Universal Mobile Telecommunication System (UMTS), Wireless Broadband (WiBro), or Global System for Mobile Communications (GSM)). The wired communication may include, for example, at least one of a universal serial bus (USB), a High Definition Multimedia Interface (HDMI), a Recommended Standard (RS)-232, and a Plain Old Telephone Service (POTS).

According to an embodiment of the present disclosure, the network 162 may be a telecommunications network. The communication network may include at least one of a computer network, the Internet, the Internet of things, and a telephone network. According to an embodiment of the present disclosure, a protocol (e.g., a transport layer protocol, a data link layer protocol, or a physical layer protocol) for communication between the electronic device 101 and an external electronic device may be supported in at least one of the application 124, the API 123, the middleware 122, the kernel 121, and the communication interface 160.

The image control module 170 may re-encode an image, which has been encoded using an encoding scheme for display on a display module including a pentile structure (herein, the encoding scheme will be referred to as "pentile encoding" or a "first encoding type" when necessary), using a Contrast Dependent Encoding (CDE) (which will be referred to as a "second encoding type" when necessary). With such encoding operations, the size of the image may be reduced to about 33.3%. At least one function or at least one operation performed by the image control module 170 may be set to be performed by, for example, the processor 110 according to various embodiments of the present disclosure. A detailed description of the image control module 170 will be provided below.

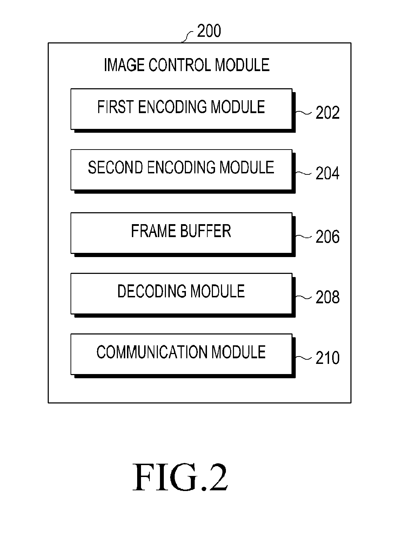

FIG. 2 is a block diagram of an image control module of an electronic device according to various embodiments of the present disclosure.

Referring to FIG. 2, an image control module 200 according to various embodiments of the present disclosure may include a first encoding module 202, a second encoding module 204, a frame buffer 206, a decoding module 208, and a communication module 210.

The first encoding module 202 may be configured to encode an image according to the first encoding type. When the first encoding type (pentile encoding) is used, the image may be encoded to have a size of about 66.6% of the original size of the image before encoding. For reference, the pentile structure may mean structure in which a plurality of sub pixels are arranged in a Red/Green/Blue/Green (RGBG) and/or Red/Green/Blue/White (RGBW) structure. The meaning of the pentile structure may be easily understood by those of ordinary skill in the art, and thus will not be described in detail.

The second encoding module 204 may be set to encode the image according to the second encoding type. When the image is encoded according to the second encoding type (CDE), the image may be encoded to have a size of about 50% of a size of the image before being encoded according to the first encoding type. Thus, the image processing apparatus according to various embodiments of the present disclosure may encode an image having a size of about 33.3% of a size of the image before being encoded, using a combination of the first encoding module 202 set to perform pentile encoding and the second encoding module 204 set to perform CDE. As a result, in image transmission, it is possible to reduce the amount of data transmission, to prevent unnecessary use of memory resources, and to reduce power consumption.

The frame buffer 206 temporarily stores the encoded image. According to various embodiments of the present disclosure, the frame buffer 206 may be separately configured from a main memory device (e.g., the memory 120). The frame buffer 206 may be easily understood by those of ordinary skill in the art, and thus will not be described in detail. In various embodiments of the present disclosure described below, the frame buffer 206 may be omitted.

The decoding module 208 decodes the image encoded by the second encoding module 204. In this case, a display module (not illustrated) for displaying the decoded image may be a display module supporting a pentile scheme. According to various embodiments of the present disclosure, the decoding module 208 sequentially decodes the image encoded by the first encoding module 202 and the second encoding module 204. In this case, the display module (not illustrated) for displaying the decoded image is not limited to the display module supporting the pentile scheme and various display modules may be applied.

The communication module 210 transmits the image encoded by the second encoding module 204 to other electronic devices (e.g., a smartphone, a wearable device, and so forth). The image processing method according to various embodiments of the present disclosure may be applied to other electronic devices as well as a single electronic device.

According to an embodiment of the present disclosure, performing pentile encoding by the first encoding module 202 includes receiving Red/Green/Blue (RGB) data for a pixel of the image for gamma correction and performing gamma correction for the RGB data, converting the gamma-corrected RGB data into a Sub Pixel Rendering (SPR) domain, and outputting the RGB data converted into the SPR domain.

According to an embodiment of the present disclosure, performing CDE by the second encoding module 204 includes encoding the image based on at least one type of box filtering for a pixel of the image and truncation for the pixel.

According to an embodiment of the present disclosure, encoding the image based on at least one type of box filtering and truncation includes encoding the image according to a mode in which a luminance error for sub pixels of the pixel, calculated based on at least one type of the box filtering and the truncation is minimum.

According to an embodiment of the present disclosure, pixels of the encoded image include an indicator indicating one of the box filtering type and the truncation type.

According to an embodiment of the present disclosure, decoding the image encoded according to the second encoding type includes decoding the image by repairing and replicating a sub pixel corresponding to a sub pixel in which the indicator is located, from among sub pixels of the pixel, if the indicator indicates the box filtering type.

According to an embodiment of the present disclosure, decoding the image encoded according to the second encoding type includes decoding the image by determining an upper nibble of the pixel and replicating the determined upper nibble to a lower nibble, if the indicator indicates the truncation type.

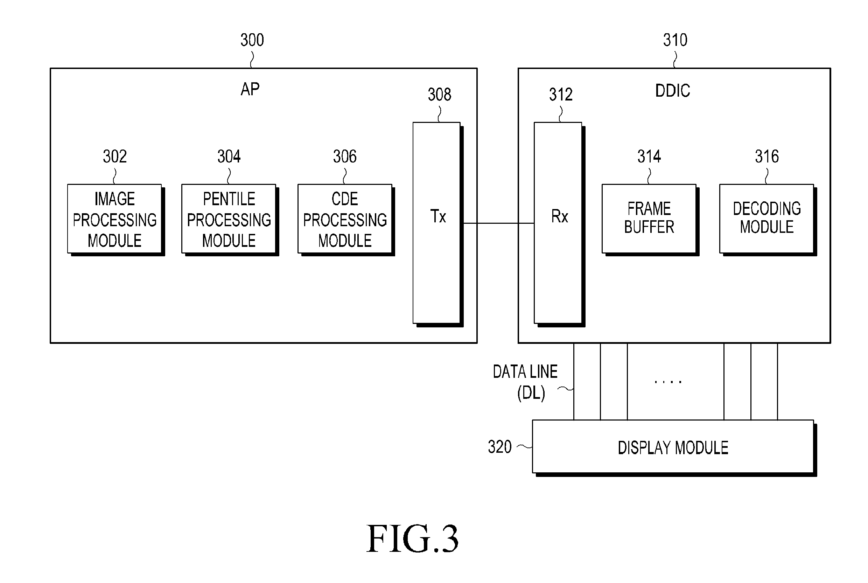

FIG. 3 is a diagram for describing at least one function or at least one operation of an image processing apparatus according to an embodiment of the present disclosure.

Referring to FIG. 3, an image processing apparatus according to an embodiment of the present disclosure may include an Application Processor (AP) 300, a Display Driver Integrated Circuit (DDIC) 310, and a display module 320. The DDIC 310 and the display module 320 may be electrically connected through a Data Line (DL).

The AP 300 may include one or more APs or one or more Communication Processors (CPs, not illustrated).

For example, the AP 300 may be configured by including the AP 300 and the CP in a single IC package or different IC packages. The AP 300 may be implemented using, for example, the processor 110.

The AP 300 may control multiple hardware or software components connected to the AP 300 by driving an Operating System (OS) or an application program, or may process various data including multimedia data and perform operations. The AP 300 may be implemented using, for example, a System on Chip (SoC). According to an embodiment of the present disclosure, the AP 300 may further include a Graphic Processing Unit (GPU, not illustrated).

For example, if the electronic device 101 has a communication function, the AP 300 may be set to perform at least one function or at least one operation such as short-range communication, recognition of location information of an electronic device, broadcasting reception, wireless Internet access, user input recognition, and the like. The AP 300 according to an embodiment of the present disclosure may be implemented using, for example, the above-described processor 110.

The AP 300 according to an embodiment of the present disclosure may include an image processing module 302, a pentile processing module 304, and a CDE processing module 306.

The image processing module 302 may be configured to perform signal processing on the image by using various digital data (e.g., encoded data). The signal processing may include functions or operations such as color interpolation, color correction, auto white balance, gamma correction, color saturation correction, formatting, bad pixel correction, hue correction, and the like.

The pentile processing module 304 may be configured to perform the above-described pentile encoding. The pentile encoding may mean encoding, for example, a pixel having RGB/RGB (48-bit) sub pixels into a pixel having RGBG (32-bit) or RGBW (32-bit) sub pixels.

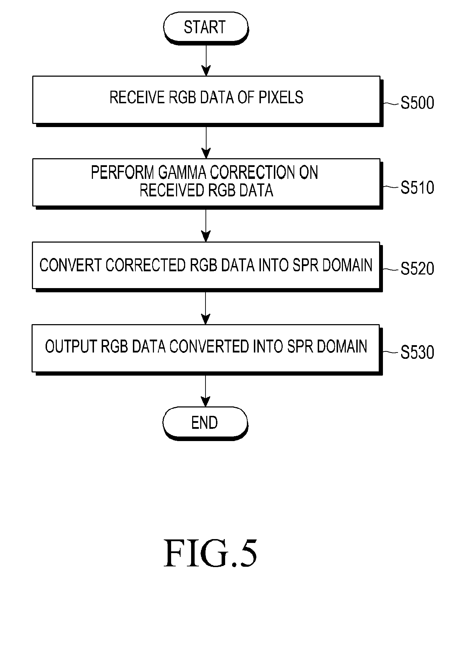

FIG. 5 is a flowchart illustrating at least one function or at least one operation of pentile encoding performed by a pentile processing module according to an embodiment of the present disclosure.

Referring to FIG. 5, to describe at least one function or at least one operation of the pentile encoding, the pentile processing module 304 receives RGB data of pixels in operation S500 and performs gamma correction with respect to the received RGB data in operation S510. The gamma correction may be set to be performed by the pentile processing module 304 instead of the image processing module 302 according to various embodiments of the present disclosure. The term "gamma correction" may be used for "gamma encoding" according to an embodiment of the present disclosure. The gamma correction may mean nonlinearly changing a strength signal of light with a non-linear transfer function, and the meaning of the gamma correction may be clearly understood by those of ordinary skill in the art and thus will not be described in detail.

After performing the gamma correction, the pentile processing module 304 converts the corrected RGB data into an SPR domain in operation S520 and outputs the RGB data converted into the SPR domain in operation S530.

The CDE processing module 306 may be a module set to perform CDE. The CDE is an encoding method based on a fact that if an error of a gradation value of a color has a value a user cannot notice, the user recognizes the color as the same color as an expected color. Through the CDE, if a defective pixel is included in a display module, the defective pixel is corrected in a software manner rather than in a physical manner, to use the display module.

For encoding with the CDE, box filtering that averages gradation values of pixels to be encoded or truncation that quantizes bit depths of the pixels into, for example, 1/2 may be used.

The CDE processing module 306 may calculate a luminance error for the CDE. The luminance error for the CDE with respect to pentil-encoded pixels is as follows:

$$L_{err} = 2*R_{err} + 5*G_{err} + B_{err} \quad \text{...Equation 1}$$

As may be seen in Equation 1, a luminance error $L_{err}$ may be expressed as a value obtained by applying predetermined weights to a luminance error $R_{err}$ for Red (R), a luminance error $G_{err}$ for Green (G), and a luminance error $B_{err}$ for Blue (B), and Equation 1 may be specified as follows:

$$Lerr = 2* \left| R_{org} - R_{enc} \right| + 5* \left| G_{org} - G_{enc} \right| + \left| B_{org} - B_{enc} \right| \quad \text{...Equation 2}$$

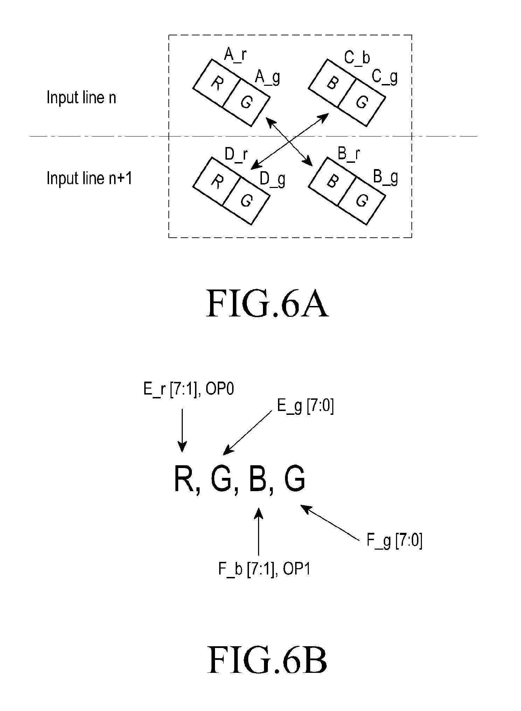

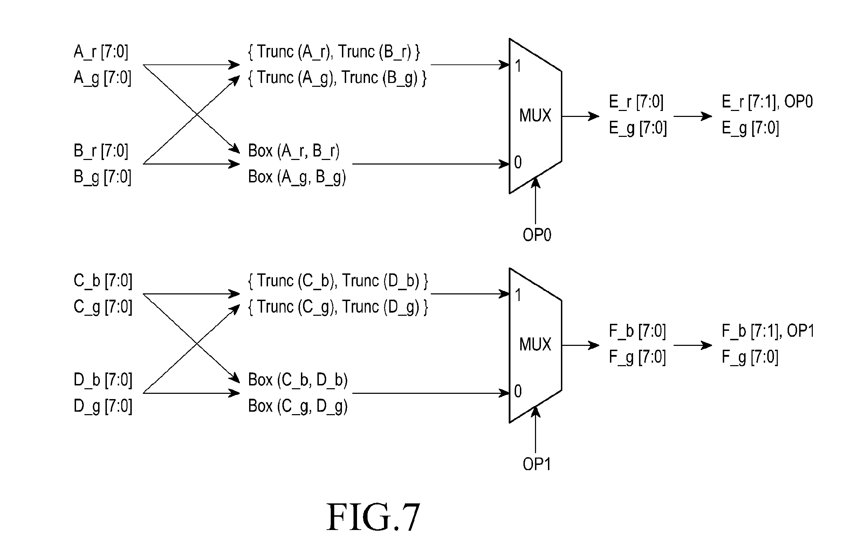

A luminance error for each sub pixel (RGB) may be an absolute value of a difference between a gradation value (e.g., Rorg) of a sub pixel before box filtering or truncation (i.e., encoding based on CDE) is applied to the sub pixel and a gradation value (e.g., Renc) of a sub pixel after box filtering or truncation (i.e., encoding based on CDE) is applied to the sub pixel. When CDE is applied, the largest weight value is applied to a luminance error for green G, considering that most retinal cells of a human perceive "green". The CDE processing module 306 may be set to perform encoding based on CDE in such a way that a luminance error calculated for each pixel using Equation 1 or 2 is smallest. At least one function or at least one operation of CDE performed by the CDE processing module 306 are illustrated in FIGS. 6A, 6B, and 7.

FIGS. 6A, 6B, and 7 are diagrams for describing the at least one function or at least one operation of CDE performed by the CDE processing module according to various embodiments of the present disclosure.

Referring to FIGS. 6A and 6B, the pentile-encoded pixels may have a structure as illustrated in FIG. 6B, and may be input to the CDE processing module 306 for CDE. FIG. 6B illustrates sub pixels encoded by the CDE processing module 306. FIG. 6A illustrates an embodiment of the present disclosure for applying box filtering and truncation to pixels converted into an SPR domain, in which box filtering and truncation are applied to pixels located diagonally.

Referring to FIG. 7, when box filtering (Box() as shown in FIG. 7) and truncation(Trunc() as shown in FIG. 7) are applied to a pixel A and a pixel B and then a luminance error is calculated, application of box filtering results in the lowest luminance error. Pixels encoded through CDE may have an indicator having information about a scheme (i.e., box filtering or truncation) used to encode the pixels. For example, the indicator may be an Operation (OP) code; an OP code having a value of 0 may mean that encoding is performed using box filtering and an OP code having a value of 1 may mean that encoding is performed using truncation. However, an embodiment of the OP code is intended for a description of the present disclosure and is not intended to limit an embodiment of the present disclosure. In FIG. 7, an OP code of a pixel E in which the pixel A and the pixel B are encoded has a value of 0, and the OP code may mean that the pixel A and the pixel B have been encoded through box filtering. An OP code of a pixel F in which a pixel C and a pixel D are encoded has a value of 1, and the OP code may mean that the pixel C and the pixel D have been encoded through truncation. The OP code may be of, for example, 1 bit. The OP code may be referred to for decoding performed by the decoding module 316. Referring to FIG. 6B, in an embodiment of the present disclosure, encoded red R may include an OP code of 1 bit among 8 bits. In an embodiment of the present disclosure, encoded blue B may also include an OP code of 1 bit among 8 bits. A sub pixel illustrated in FIG. 6B is intended for a description of the present disclosure, and is not intended to limit an embodiment of the present disclosure.

A transmission module Tx 308 is set to transmit data of an encoded image to the DDIC 310.

The DDIC 310 may include a reception module Rx 312, a frame buffer 314, and a decoding module 316.

The reception module 312 is set to receive the data transmitted by the transmission module Tx 308.

The frame buffer 314 is set to temporarily store the encoded image. The frame buffer 314 according to an embodiment of the present disclosure may be, for example, the frame buffer 206 described with reference to FIG. 2.

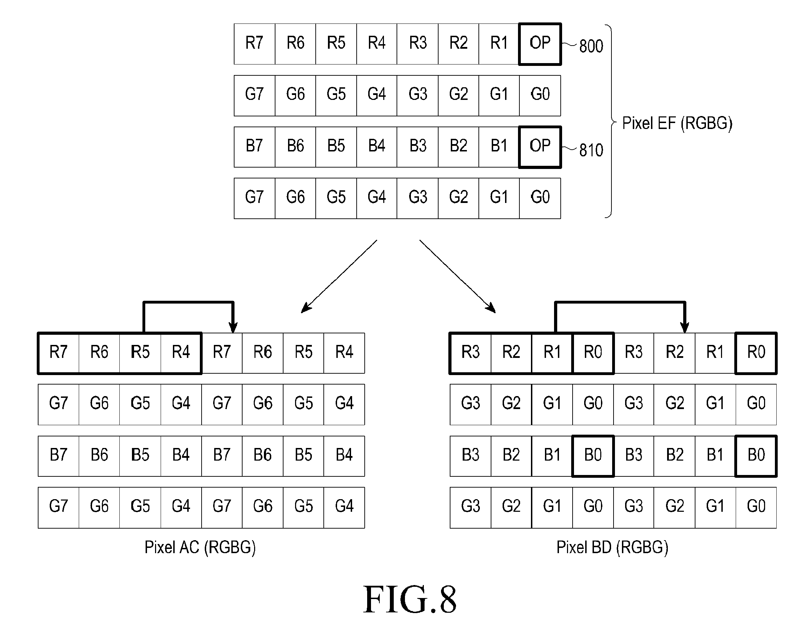

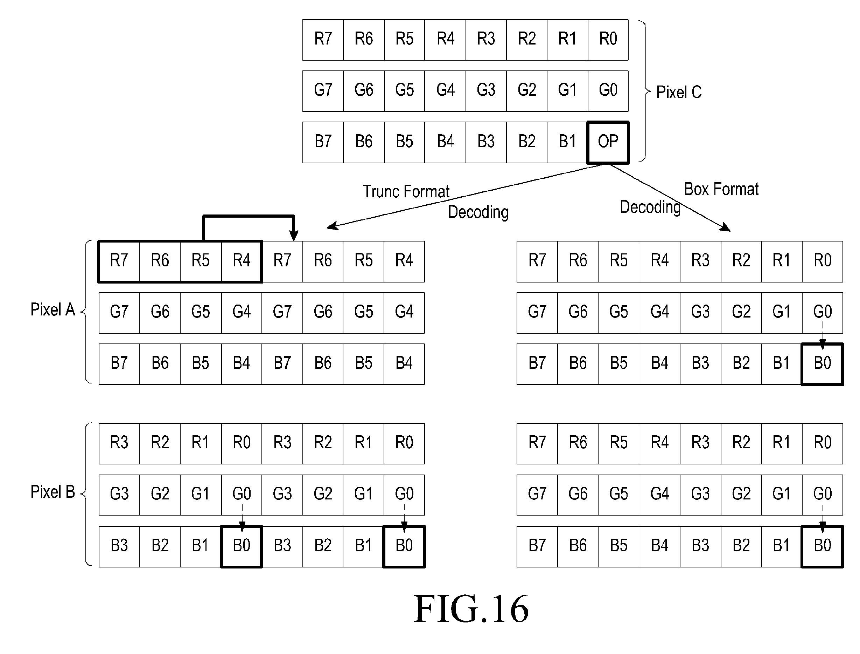

The decoding module 316 is set to decode the image including the encoded pixels. A decoding function or operation (illustrated in FIG. 8) performed by the decoding module 316 is based on decoding according to an embodiment of the present disclosure illustrated in FIG. 16, and thus FIG. 16 will be first described and then FIG. 8 will be described.

FIG. 16 is a diagram for describing decoding at least one function or at least one operation when a pentile processing module is omitted according to various embodiments of the present disclosure.

Referring to FIG. 16, the encoded pixel C may include an OP code. As described above, if an OP code has a value of 0, the OP code means that the pixel has been encoded using box filtering, and if an OP code has a value of 1, the OP code means that the pixel has been encoded using truncation. For example, for the OP code having a value of 0, decoding may be performed such that data associated with a sub pixel where the OP code is located may be repaired and replicated for encoding. In FIG. 16, since the OP code is located in blue B among sub pixels, the decoding module 316 may perform encoding by repairing and replicating data B0 associated with a sub pixel B where the OP code is located. For the OP code having a value of 1 (for truncation), an upper nibble may be determined and replicated for decoding. If the OP code is included in the course of determining the upper nibble, the decoding module 316 may perform encoding by repairing and replicating the data B0 associated with the sub pixel B where the OP code is located, like in case of the OP code having the value of 0.

FIG. 8 is a diagram for describing at least one function or at least one operation in which encoded pixels are decoded by a decoding module according to an embodiment of the present disclosure.

Referring to FIG. 8, the description of FIG. 16 may be equally applied to FIG. 8. Thus, since OP codes 800 and 810 included in a pixel EF respectively have values of 0 (box filtering) and 1 (truncation), a pixel AC and a pixel BD that are output as a result of decoding by the decoding module 316 may be output as illustrated in FIG. 8.

The display module 320 is set to display the image including the decoded pixels. The display module 320 may be implemented by, for example, the display 150.

The DDIC 310 has been described to be included in one image processing apparatus, together with the application processor 300, but the embodiment of the present disclosure is not limited by this description. That is, the DDIC 310 may be included in a separate electronic device (not illustrated) that is different from an image processing apparatus including the application processor 300 according to various embodiments of the present disclosure.

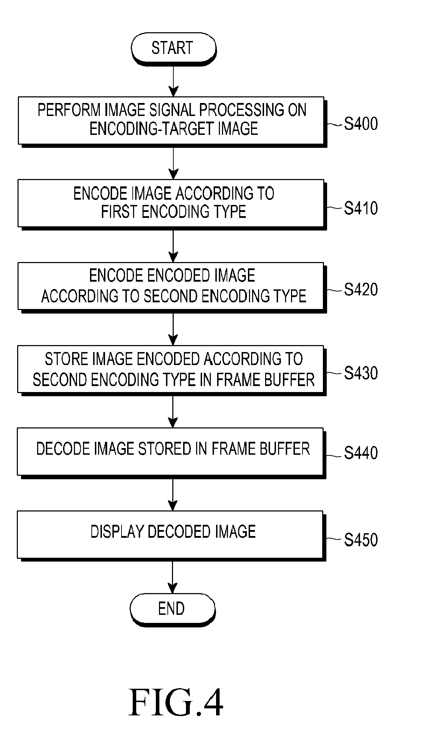

FIG. 4 is a flowchart illustrating an image processing method according to an embodiment of the present disclosure.

Referring to FIG. 4, an image processing method according to an embodiment of the present disclosure may include an image signal processing operation S400 for an encoding-target image and an operation S410 of encoding the image according to a first encoding type. After encoding, the encoded image may be encoded according to a second encoding type in operation S420, and the image encoded according to the second encoding type may be stored in a frame buffer S430. Next, the image stored in the frame buffer may be decoded in operation S440, and the decoded image may be displayed in operation S450. The above description of the image processing apparatus may also be equally applied to the image processing method according to an embodiment of the present disclosure, and thus other details of the image processing method will not be described.

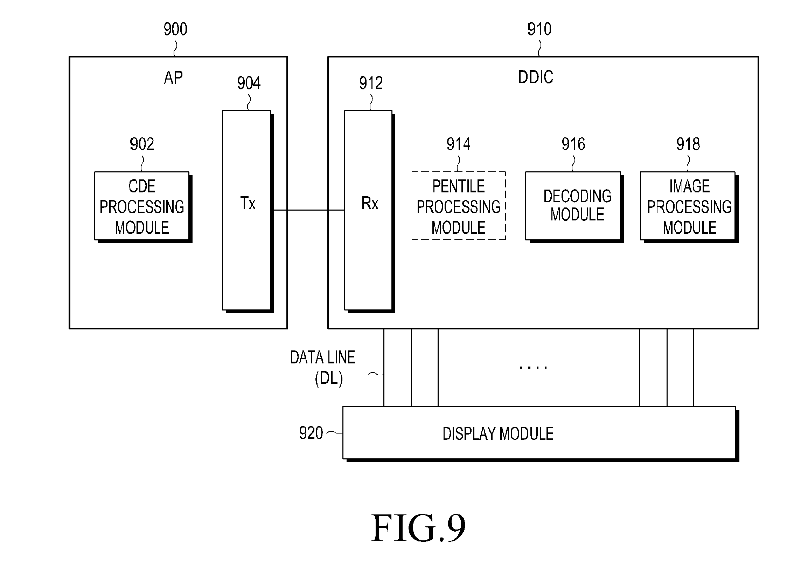

FIG. 9 is a diagram for describing at least one function or at least one operation of an image processing apparatus according to an embodiment of the present disclosure.

Referring to FIG. 9, an image processing apparatus according to another embodiment of the present disclosure may be configured such that a CDE processing module 902 and a transmission module Tx 904 are included in an application processor 900. A pentile processing module 914 may be selectively included in a DDIC 910, and an image processing module 918 and a decoding module 916 may be included in the DDIC 910. The image processing apparatus further includes a display module 920. The same description as the foregoing description made with reference to FIG. 3 may be applied to the modules and various components included in the image processing apparatus illustrated in FIG. 9, and thus a detailed description thereof will not be provided.

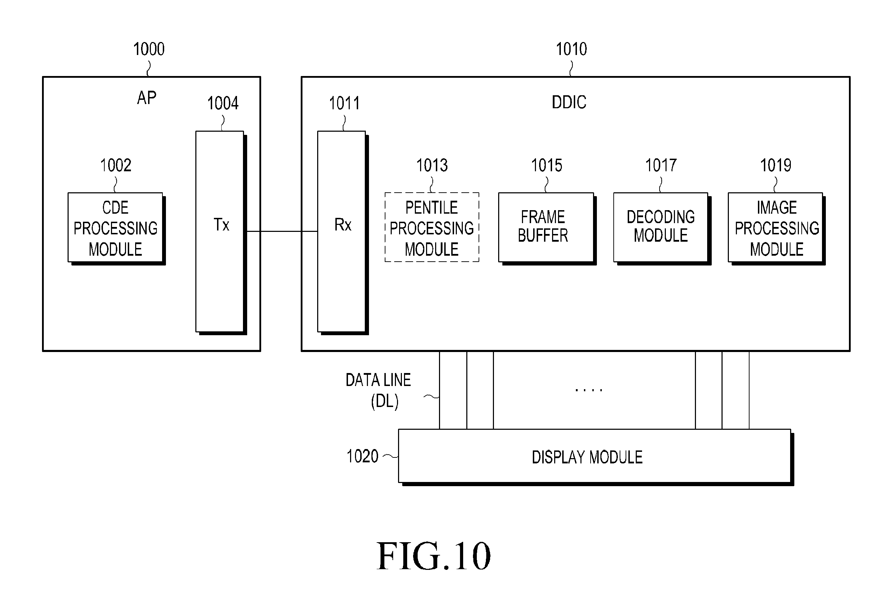

FIG. 10 is a diagram for describing at least one function or at least one operation of an image processing apparatus according to an embodiment of the present disclosure.

Referring to FIG. 10, an image processing apparatus according to another embodiment may further include a frame buffer 1015 in addition to the image processing apparatus illustrated in FIG. 9. An AP 1000 is equivalent to the AP 300, a CDE processing module 1002 is equivalent to the CDE processing module 306, a DDIC 1010 is equivalent to the DDIC 310, a pentile processing module 1013 is equivalent to the pentile processing module 304, a frame buffer 1015 is equivalent to the frame buffer 314, a decoding module 1017 is equivalent to the decoding module 316, an image processing module 1019 is equivalent to the image processing module 918, and a display module 1020 is equivalent to the display module 320. Therefore, the same description as the foregoing description made with reference to FIG. 3 may be applied to the modules and various components included in the image processing apparatus illustrated in FIG. 10, and thus a detailed description thereof will not be provided.

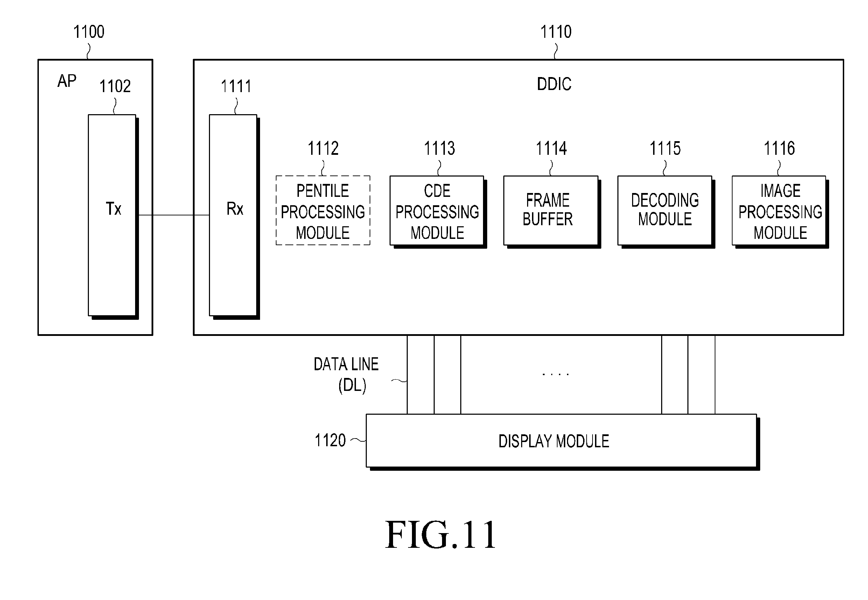

FIG. 11 is a diagram for describing at least one function or at least one operation of an image processing apparatus according to another embodiment of the present disclosure.

Referring to FIG. 11, in an image processing apparatus according to another embodiment of the present disclosure, an application processor 1100 may include a transmission module 1102, and a DDIC 1110 may include a CDE processing module 1113, a frame buffer 1114, a decoding module 1115, and an image processing module 1116. Like the image processing apparatus according to another embodiment of the present disclosure, a pentile processing module 1112 may be selectively included. A pentile processing module 1112 is equivalent to the pentile processing module 304, and a display module 1120 is equivalent to the display module 320. Therefore, the same description as the foregoing description made with reference to FIG. 3 may be applied to the modules and various components included in the image processing apparatus illustrated in FIG. 11, and thus a detailed description thereof will not be provided.

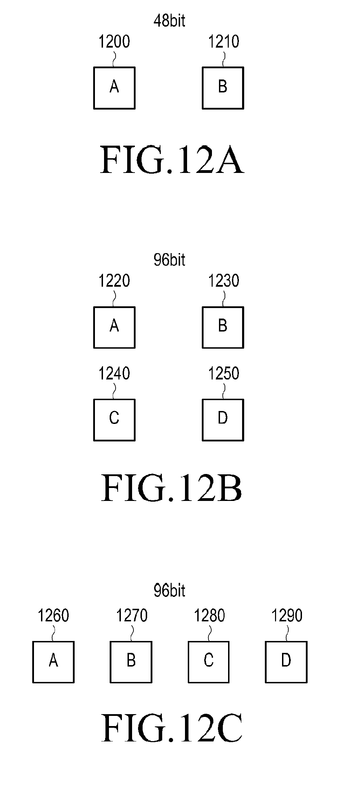

FIGS. 12A, 12B, 12C, 13, 14A, 14B, 14C, 14D, 14E, 14F, 14G, 14H, 14I, 14J, 14K, 14L, 14M, 14N, 14O, and 15 are diagrams for describing encoding at least one function or at least one operation when a pentile processing module is omitted according to other embodiments of the present disclosure.

Referring to FIGS. 12A to 12C, when pixels are encoded using CDE, a structure of pixels to be encoded may be set to one of $2\times1$ (FIG. 12A), $2\times2$ (FIG. 12B), and $4\times1$ (FIG. 12C). 'A' 1200, , 'B' 1201, 'A' 1220, 'B' 1230, 'C' 1240, 'D' 1250, A' 1260, 'B' 1270, 'C' 1280, and 'D' 1290 are illustrated in FIG. 12 may indicate pixels included in the image. By using CDE, a $2\times1$ structure of 48 bits may be encoded into 24 bits and a $2\times2$ or $4\times1$ structure of 96 bits may be encoded into 48 bits.

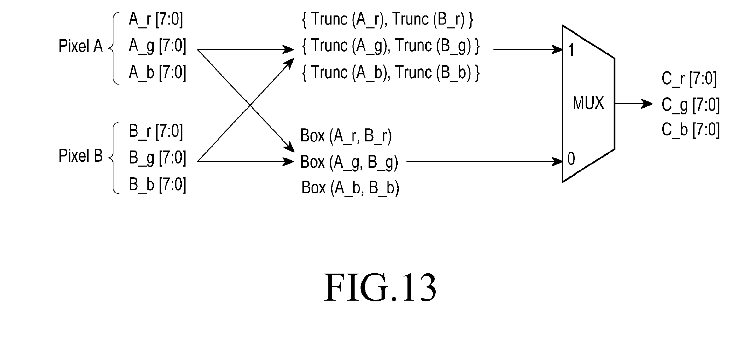

Referring to FIG. 13, a process in which a pixel structure, which is a basis of CDE, is set to, for example, the $2\times1$ structure and pixels are encoded is illustrated. The description made with reference to FIG. 7 may be equally applied to this process. However, pixels to be encoded through CDE have been converted into the SPR domain in FIG. 7, whereas pixels having not passed through pentile encoding are subject to CDE in FIG. 13. As described above, a CDE processing module (e.g., 902) according to various embodiments of the present disclosure may be determined to calculate the above-described luminance error using box filtering or truncation for encoding. However, if pentile encoding is not performed as in FIG. 13, an equation for calculating the luminance error may be defined as follows:

$$L_{err} = (2/8)*R_{err} + (5/8)*G_{err} + (1/8)* B_{err} \quad ...\text{Equation 3}$$

The same description regarding Equation 2 may be equally applied to a luminance error (e.g., $R_{err}$) of each sub pixel in Equation 3, and thus a detailed description thereof will not be provided.

A CDE processing module (e.g., 902) according to various embodiments of the present disclosure may be set to calculate a luminance error based on Equation 3 and to perform CDE based on a mode in which the luminance error is minimum.

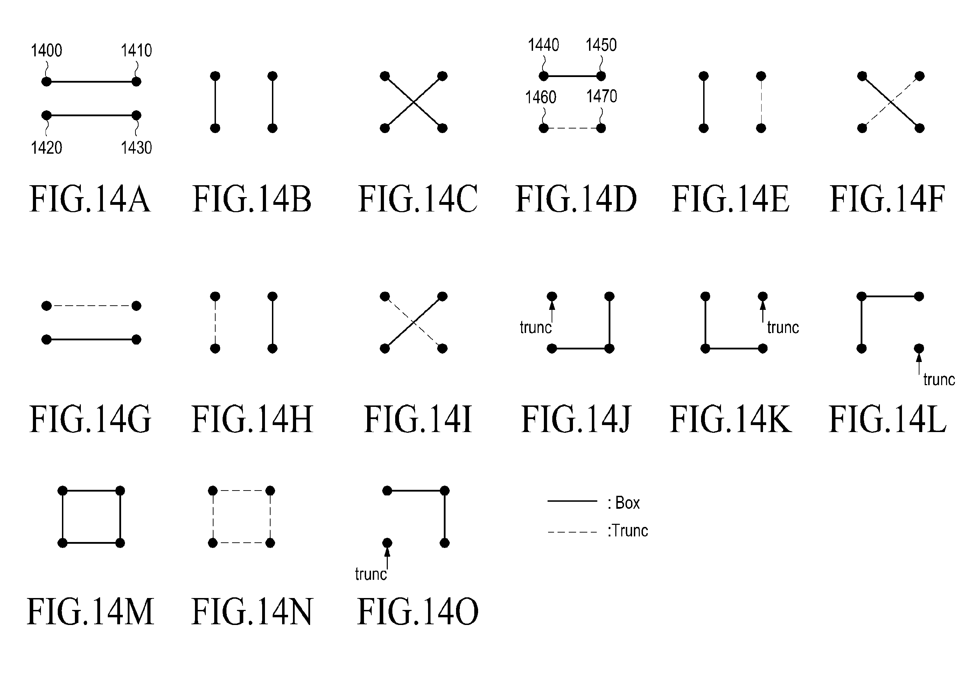

Referring to FIGS. 14A to 14O, a set of various modes for calculating a minimum luminance error, if a pixel structure, which is a basis of CDE, is set to, for example, the 2×2 or 4×1 structure is illustrated. To calculate the luminance error using Equation 3, for example, as illustrated in FIG. 14A, a mode may exists in which box filtering is performed on pixels 1400, 1410, 1420, and 1430 to be encoded for calculation of the luminance error. According to another embodiment of the mode, as illustrated in FIG. 14D, a mode may exist in which both box filtering (e.g., pixels 1440 and 1450) and truncation (e.g., pixels 1460 and 1470) are performed. A CDE processing module (e.g., 902) according to various embodiments of the present disclosure may calculate a luminance error for various modes illustrated in FIG. 14 to select a mode having the minimum luminance error and to perform CDE according to the mode. Since the 4×1 structure illustrated in FIG. 12C may be modified into the 2×2 structure illustrated in FIG. 12B, the foregoing description made with reference to FIG. 14 may be applied to the 4×1 structure.

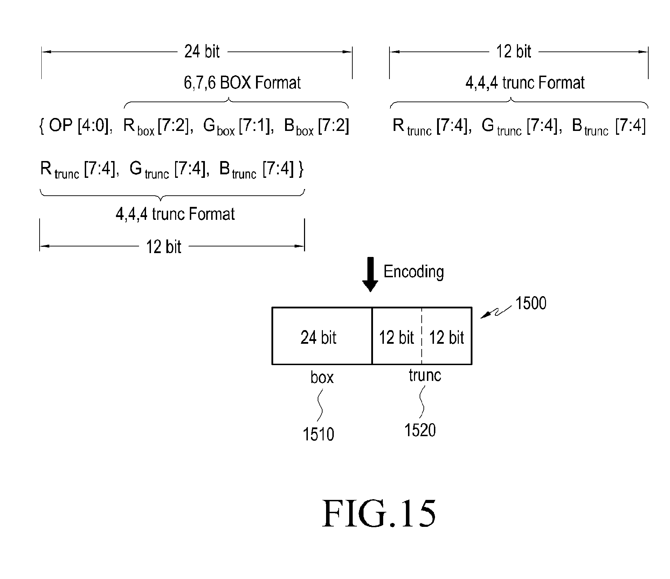

Referring to FIG. 15, an embodiment of the present disclosure is illustrated in which encoding 1500 is performed based on a mode (e.g., as illustrated in FIG. 14D) where both box filtering 1510 and truncation 1520 are performed. Encoded pixels may include an OP code of 5 bits and may include 19-bit pixel data encoded in a box format. The encoded pixels may also include 24-bit pixel data encoded in a trunc format.

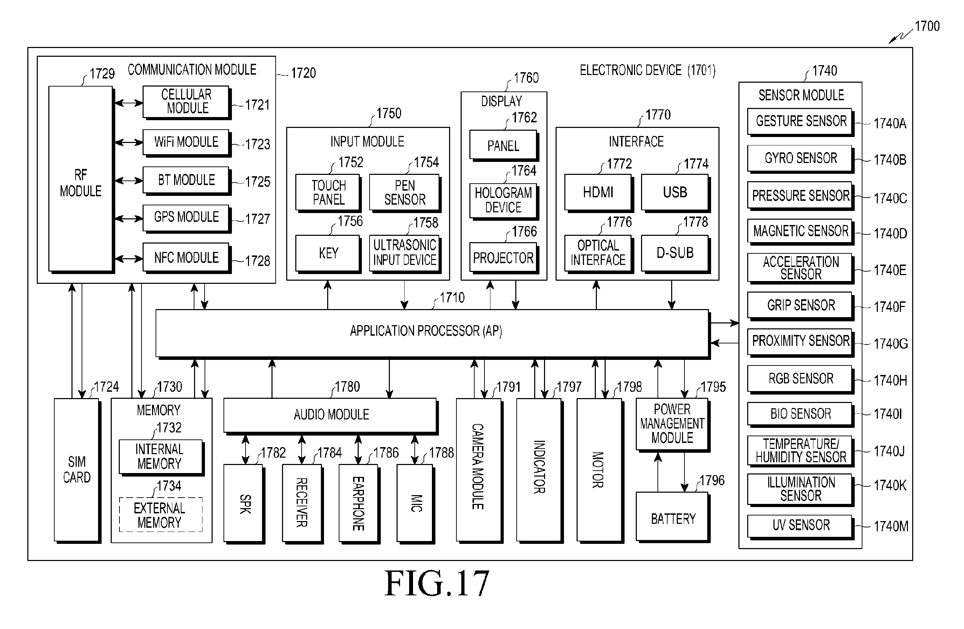

FIG. 17 is a block diagram of an electronic device to which an image processing apparatus or method according to various embodiments of the present disclosure.

Referring to FIG. 17, an electronic device 1701 may form the entire electronic device 101 illustrated in FIG. 1 or a part thereof. The electronic device 1701 may include one or more APs 1710, a communication module 1720, a Subscriber Identification Module (SIM) card 1724, a memory 1730, a sensor module 1740, an input device 1750, a display 1760, an interface 1770, an audio module 1780, a camera module 1791, a power management module 1795, a battery 1796, an indicator 1797, and a motor 1798.

The AP 1710 may control multiple hardware or software components connected to the AP 1710 by driving an OS or an application program, and may process various data including multimedia data and perform operations. The AP 1710 may be implemented by, for example, an SoC. According to an embodiment of the present disclosure, the AP 1710 may further include a GPU (not illustrated).

The communication module 1720 (e.g., the communication interface 160) may perform data transmission/reception in communication between the electronic device 1701 (e.g., the electronic device 101) and other electronic devices (e.g., the electronic device 104 or the server 106) connected through the network. According to an embodiment of the present disclosure, the communication module 1720 may include at least one of a cellular module 1721, a Wi-Fi module 1723, a BT module 1725, a GPS module 1727, an NFC module 1728, and a Radio Frequency (RF) module 1729.

The cellular module 1721 provides at least one of voice communication, video communication, a messaging service, and an Internet service through a communication network (e.g., LTE, LTE-A, CDMA, WCDMA, UMTS, WiBro, GSM, and the like). The cellular module 1721 may identify and authenticate an electronic device in a communication network by using a SIM (e.g., the SIM card 1724). According to an embodiment of the present disclosure, the cellular module 1721 performs at least some of functions provided by the AP 1710. For example, the cellular module 1721 may perform at least a part of a multimedia control function.

According to an embodiment of the present disclosure, the cellular module 1721 may include a Communication Processor (CP). The cellular module 1721 may be implemented with, for example, a SoC. Although components such as the cellular module 1721 (e.g., the CP), the memory 1730, or the power management module 1795 are illustrated as being separated from the AP 1710, the AP 1710 may be implemented to include at least some (e.g., the cellular module 1721) of the foregoing components.

According to an embodiment of the present disclosure, the AP 1710 or the cellular module 1721 (e.g., the CP) may load a command or data received from at least one of a nonvolatile memory connected thereto and other components to a volatile memory and process the received command or data. The AP 1710 or the cellular module 1721 may store data received from at least one of other components or data generated by at least one of other components in the nonvolatile memory.

Each of the Wi-Fi module 1723, the BT module 1725, the GPS module 1727, and the NFC module 1728 may include a processor for processing data transmitted and received through the corresponding module. Although the cellular module 1721, the Wi-Fi module 1723, the BT module 1725, the GPS module 1727, and the NFC module 1728 are illustrated as separate blocks in FIG. 17, at least some (e.g., two or more) of the cellular module 1721, the Wi-Fi module 1723, the BT module 1725, the GPS module 1727, and the NFC module 1728 may be included in one Integrated Chip (IC) or IC package. For example, at least some of processors corresponding to the cellular module 1721, the Wi-Fi module 1723, the BT module 1725, the GPS module 1727, and the NFC module 1728 (e.g., the CP 811 corresponding to the cellular module 1721 and a Wi-Fi processor corresponding to the Wi-Fi module 1723) may be implemented in one SoC.

The RF module 1729 may transmit and receive data, for example, an RF signal. The RF module 1729 may include, although not shown, at least one of a transceiver, a Power Amplification Module (PAM), a frequency filter, and a Low Noise Amplifier (LNA). The RF module 1729 may further include at least one of parts for transmitting and receiving electromagnetic waves on a free space, for example, a conductor and a conductive wire, in wireless communication. Although the cellular module 1721, the Wi-Fi module 1723, the BT module 1725, the GPS module 1727, and the NFC module 1728 are illustrated as sharing one RF module 1729 in FIG. 17, at least one of the cellular module 1721, the Wi-Fi module 1723, the BT module 1725, the GPS module 1727, and the NFC module 1728 may transmit and receive an RF signal through a separate RF module according to an embodiment of the present disclosure.

The SIM card 1724 may be a card including a SIM, and may be inserted into a slot formed in a particular position of the electronic device. The SIM card 1724 may include unique identification information (e.g., an Integrated Circuit Card Identifier (ICCID)) or subscriber information (e.g., an International Mobile Subscriber Identity (IMSI)).

The memory 1730 (e.g., the memory 130) may include an internal memory 1732 or an external memory 1734. The internal memory 1732 may include at least one selected from among a volatile memory (e.g., a Dynamic Random Access Memory (DRAM), a Static RAM (SRAM), a Synchronous Dynamic RAM (SDRAM), and the like) and a nonvolatile memory (e.g., a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, and the like).

According to an embodiment of the present disclosure, the internal memory 1732 may be a Solid State Drive (SSD). The external memory 1734 may further include a flash drive, for example, at least one of a compact flash, Secure Digital (SD), micro-SD, mini-SD, extreme digital (xD), and a memory stick. The external memory 1734 may be functionally connected with the electronic device 1701 through various interfaces. According to an embodiment of the present disclosure, the electronic device 1701 may further include a storage device (or storage medium) such as a hard drive.

The sensor module 1740 measures a physical quantity or senses an operation state of the electronic device 1701 to convert the measured or sensed information into an electric signal. The sensor module 1740 may include at least one selected from among a gesture sensor 1740A, a gyro sensor 1740B, a pressure sensor 1740C, a magnetic sensor 1740D, an acceleration sensor 1740E, a grip sensor 1740F, a proximity sensor 1740G, a color sensor 1740H (e.g., RGB sensor), a bio sensor 1740I, a temperature/humidity sensor 1740J, an illumination sensor 1740K, an Ultra Violet (UV) sensor 1740M, and the like. Additionally or alternatively, the sensor module 1740 may include at least one selected from among an E-nose sensor (not illustrated), an Electromyography (EMG) sensor (not illustrated), an Electroencephalogram (EEG) sensor (not illustrated), an Electrocardiogram (ECG) sensor (not illustrated), an Infrared (IR) sensor (not illustrated), an iris sensor (not illustrated), a fingerprint sensor (not illustrated), and the like. The sensor module 1740 may further include a control circuit for controlling at least one sensors included therein.

The input device 1750 may include a touch panel 1752, a (digital) pen sensor 1754, a key 1756, or an ultrasonic input device 1758. The touch panel 1752 may recognize a touch input by using at least one of a capacitive, a resistive, infrared, or ultrasonic scheme. The touch panel 1752 may further include a control circuit. For the capacitive touch panel 1752, recognition of a physical contact or approach is possible. The touch panel 1752 may further include a tactile layer. In this case, the touch panel 1752 may provide tactile reaction to a user.

The (digital) pen sensor 1754 may be implemented using a method that is the same as or similar to a user's touch input or by using a separate recognition sheet. The key 1756 may include a physical button, an optical key, or a keypad. The ultrasonic input device 1758 is a device that allows the electronic device 1701 to sense ultrasonic waves, input using an input means that generates an ultrasonic signal, through a microphone (e.g., a microphone 1788), and to check data. The ultrasonic input device 1758 is capable of performing wireless recognition. According to an embodiment of the present disclosure, the electronic device 1701 may receive a user input from an external electronic device (e.g., a computer or a server) connected thereto by using the communication module 1720.

The display 1760 (e.g., the display 150) may include a panel 1762, a hologram device 1764, or a projector 1766. The panel 1762 may be, for example, a Liquid Crystal Display (LCD), an Active-Matrix Organic Light-Emitting Diode (OLED), and the like. The panel 1762 may be implemented as being flexible, transparent, or wearable. The panel 1762 may be implemented with the touch panel 1752 as one module. The hologram device 1764 may show a stereoscopic image in the air by using interference of light. The projector 1766 may project light onto the screen to display an image. The screen may be positioned inside or outside the electronic device 1701. According to an embodiment of the present disclosure, the display 1760 may further include a control circuit for controlling the panel 1762, the hologram device 1764, or the projector 1766.

The interface 1770 may include an HDMI 1772, a USB 1774, an optical interface 1776, or a D-subminiature 1778. The interface 1770 may be included in the communication interface 160 illustrated in FIG. 1. Additionally or alternatively, the interface 1770 may include a Mobile High-definition Link (MHL) interface, an SD card/Multimedia Card (MMC) interface, or an infrared Data association (IrDA) standard interface.

The audio module 1780 bi-directionally converts sound and an electric signal. At least some components of the audio module 1780 may be included in the I/O interface 140 illustrated in FIG. 1. The audio module 1780 may process sound information input or output through at least one of a speaker 1782, a receiver 1784, an earphone 1786, and the microphone 1788.

The camera module 1791 is a device capable of capturing still and moving images, and according to an embodiment of the present disclosure, the camera module 1791 may include one or more image sensors (e.g., a front sensor or a rear sensor), a lens (not illustrated), an Image Signal Processor (ISP, not illustrated), or a flash (not illustrated, for example, an LED or a xenon lamp).

The power management module 1795 may manage power of the electronic device 1701. Although not shown, a Power Management Integrated Circuit (PMIC), a charger IC, or a battery or fuel gauge may be included in the power management module 1795.

The PMIC may be mounted in, for example, an IC or an SoC semiconductor. The charging method may be classified into a wired type and a wireless type. The charger IC may charge a battery, and may prevent introduction of an over-voltage or over-current from a charger. According to an embodiment of the present disclosure, the charger IC may include a charger IC for at least one of a wired charging method and a wireless charging method. The wireless charging method may include, for example, a magnetic resonance method, a magnetic induction method, or an electromagnetic wave method, and an additional circuit for wireless charging, for example, a coil loop, a resonance circuit, or a rectifier may be added for the wireless charging method.

The battery gauge measures the remaining capacity of the battery 1796, and a voltage, a current, or a temperature of the battery 1796 during charging. The battery 1796 stores or produces electricity and supplies power to the electronic device 1700 by using the stored or produced electricity. The battery 1796 may include a rechargeable battery or a solar battery.

The indicator 1797 may display a particular state, for example, at least one of a booting state, a message state, and a charging state, of the electronic device 1700 or a part thereof (e.g., the AP 1710). The motor 1798 may convert an electric signal into mechanical vibration. Although not shown, a processing unit for supporting mobile TVs (e.g., a GPU) may be included in the electronic device 1701. The processing unit for supporting mobile TVs may process media data complying with, for example, Digital Multimedia Broadcasting (DMB), Digital Video Broadcasting (DVB), or a media flow.

The foregoing components of the electronic device according to various embodiments of the present disclosure may include one or more components, and a name of a component may vary according to a type of the electronic device. The electronic device according to various embodiments of the present disclosure may include at least one of the foregoing components, and some of them may be omitted from the electronic device or other components may be further included in the electronic device. Also, some of the components of the electronic device according to various embodiments of the present disclosure may be combined into one entity to perform the same function as those of the components that have not been combined.

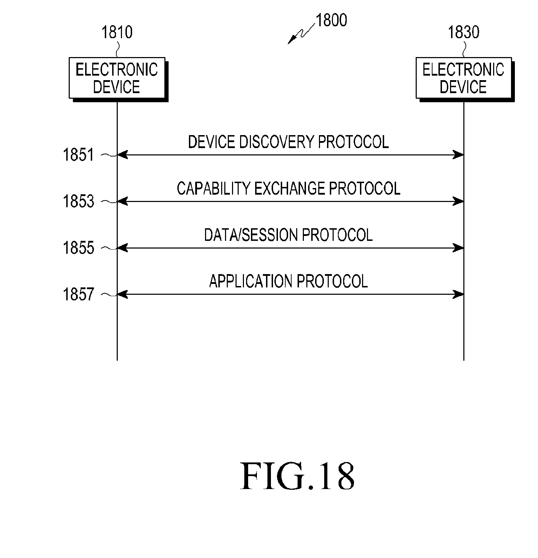

FIG. 18 is a ladder diagram illustrating a communication protocol between a plurality of electronic devices according to various embodiments of the present disclosure.

Referring to FIG. 18, for example, a communication protocol 1800 may include a device discovery protocol 1851, a capability exchange protocol 1853, a network protocol 1855, and an application protocol 1857.

According to an embodiment of the present disclosure, the device discovery protocol 1851 may be a protocol according to which electronic devices (e.g., an electronic device 1810 or an electronic device 1830) senses an external electronic device capable of communicating with the electronic devices or connect to the sensed external electronic device. For example, the electronic device 1810 (e.g., the electronic device 101) may sense the electronic device 1830 (e.g., the electronic device 104) as a device capable of communicating with the electronic device 1810, through a communication method (e.g., Wi-Fi, BT, or USB) available in the electronic device 1810, by using the device discovery protocol 1851. The electronic device 1810 may obtain and store identification information regarding the sensed electronic device 1830 by using the device discovery protocol 1851 for communication connection with the electronic device 1830. For example, the electronic device 1810 may establish communication connection with the electronic device 1830 based on at least the identification information.

According to an embodiment of the present disclosure, the device discovery protocol 1851 may be a protocol for mutual authentication among a plurality of electronic devices. For example, the electronic device 1810 may perform authentication between the electronic device 1810 and the electronic device 1830 based on communication information (e.g., a Media Access Control (MAC) address, a Universally Unique Identifier (UUID), a Subsystem Identification (SSID), and an Internet Protocol (IP) address).

According to an embodiment of the present disclosure, the capability exchange protocol 1853 is a protocol for exchanging information associated with a capability of a service that may be supported in at least one of the electronic device 1810 and the electronic device 1830. For example, the electronic device 1810 and the electronic device 1830 may exchange information associated with a capability of a service currently provided by each of them through the function exchange protocol 1853. The exchangeable information may include identification information indicating a particular service among the plurality of services that may be supported by the electronic device 1810 and the electronic device 1830. For example, the electronic device 1810 may receive identification information of a particular service provided by the electronic device 1830 from the electronic device 1830 through the capability exchange protocol 1853. In this case, the electronic device 1810 may determine based on the received identification information whether the electronic device 1810 may support the particular service.

According to an embodiment of the present disclosure, the network protocol 1855 may be a protocol for controlling a flow of data transmitted and received to provide a service through interworking between electronic devices (e.g., the electronic device 1810 and the electronic device 1830) connected for communication therebetween. For example, at least one selected from among the electronic device 1810 and the electronic device 1830 may perform error control or data quality control by using the network protocol 1855. Additionally or alternatively, the network protocol 1855 may determine a transmission format of data transmitted and received between the electronic device 1810 and the electronic device 1830. At least one selected from the electronic device 1810 and the electronic device 1830 may manage (e.g., connect or terminate) at least a session for data exchange by using the network protocol 1855.

According to an embodiment of the present disclosure, the application protocol 1857 may be a protocol for providing a procedure or information for exchanging data associated with a service provided to the external electronic device. For example, the electronic device 1810 (e.g., the electronic device 101) may provide a service to the electronic device 1830 (e.g., the electronic device 104 or the server 106) through the application protocol 1857.

According to an embodiment of the present disclosure, the communication protocol 1800 may include a standard communication protocol, a communication protocol designated by an individual or an organization (e.g., a communication protocol designated by a communication device manufacturer or a network supplier), or a combination thereof.

The term "module" used in various embodiments of the present disclosure may refer to, for example, a "unit" including one of hardware, software, and firmware, or a combination of two or more thereof. The term "module" may be interchangeable with other terms such as unit, logic, logical block, component, or circuit. A "module" may be a minimum unit of integrally configured components or a part thereof. A "module" may be a minimum unit for performing one or more functions or a part thereof. A "module" may be mechanically or electronically implemented. For example, a "module" according to various embodiments of the present disclosure may include at least one of an Application-Specific IC (ASIC) chip, a Field-Programmable Gate Arrays (FPGAs), and a programmable-logic device for performing operations which has been known or will be developed in the future.

At least a part of a device (e.g., modules or functions thereof) or a method (e.g., operations) according to various embodiments of the present disclosure may be implemented by instructions stored in the form of program modules in computer-readable storage media. When the instruction is executed by a processor (e.g., the processor 110), the one or more processors may perform a function corresponding to the instruction. The computer-readable storage medium may be, for example, the memory 120. At least a part of the programming module may be implemented (e.g., executed) by, for example, the processor 110. At least a part of the programing module may include, for example, a module, a program, a routine, sets of instructions, or a process to perform one or more functions.

The computer readable recording media may include a hardware device specially configured to store and perform a program command (e.g., a programing module), including a magnetic media such as a hard disc, a floppy disc, and a magnetic tape, an optical recording media such as a Compact Disc ROM (CD-ROM) and a DVD, a magneto-optical media such as a floptical disk, and a hardware device, such as a ROM, a RAM, and a flash memory, specifically configured to store and execute program instructions. In addition, the program instructions may include high class language codes, which may be executed in a computer by using an interpreter, as well as machine codes made by a compiler. The aforementioned hardware device may be configured to operate as one or more software modules in order to perform the operation of the present disclosure, and vice versa.

The module or program module according to various embodiments of the present disclosure may include at least one of the above-described elements, exclude some of them, or further include other elements. The operations performed by the module, the program module, or other elements according to various embodiments of the present disclosure may be executed in a sequential, parallel, repeated, or heuristic manner. Also, some operations may be executed based on a different order, may be omitted, or may additionally include another operation.

According to various embodiments of the present disclosure, in a storage medium having command stored therein, the commands are set to cause at least one processors to perform at least one operations when executed by the at least one processors, in which the at least one operations include encoding an image according to the first encoding type, encoding an image, encoded using the first encoding type, according to a second encoding type, and decoding the image encoded according to the second encoding type, and the second encoding type is CDE which depends on a contrast of the image.

With the image processing apparatus and method according to various embodiments of the present disclosure, by encoding a predetermined image using CDE, which depends on a contrast of the image, and processing and transmitting data, unnecessary use of memory resources may be prevented and power consumption may be reduced in image data processing and/or transmission.

The effects of the present disclosure are not limited to the above-described effects, and it would be obvious to those of ordinary skill in the art that various effects are included in the present disclosure.

While the present disclosure has been shown and described with reference to various embodiments thereof, it will be understood by those skilled in the art that various changes in form and details may be made therein without departing from the spirit and scope of the present disclosure as defined by the appended claims and their equivalents.

**Claims**

1.  An image processing method comprising:

    encoding an image according to a first encoding type;
    encoding the image, which has been encoded according to the first encoding type, according to a second encoding type; and
    decoding the image, which has been encoded according to the second encoding type,
    wherein the second encoding type is contrast dependent encoding (CDE) which is dependent on a contrast of the image.

2.  The image processing method of claim 1, wherein the first encoding type is pentile encoding.

3.  The image processing method of claim 2, wherein the pentile encoding comprises:

    receiving red/green/blue (RGB) data regarding pixels of the image for gamma correction;
    performing gamma correction with respect to the received RGB data;
    converting the gamma-corrected RGB data into a sub pixel rendering (SPR) domain; and
    outputting the RGB data converted into the SPR domain.

4.  The image processing method of claim 1, wherein the encoding of the image according to the second encoding type comprises:

    encoding the image based on at least one type of box filtering and truncation with respect to the pixel of the image.

5.  The image processing method of claim 4, wherein the encoding of the image based on the at least one type of box filtering and truncation comprises:

    encoding the image according to a mode in which a luminance error for sub pixels of the pixel, which is calculated based on at least one type of box filtering and truncation, is minimum.

6.  The image processing method of claim 1, further comprising storing the image encoded according to the second encoding type in a frame buffer.

7.  The image processing method of claim 1, further comprising transmitting the image encoded according to the second encoding type to another electronic device.

8.  An image processing apparatus comprising:

    a processor configured:

        to encode an image according to a first encoding type,

to encode the image, which has been encoded according to the first encoding type, according to a second encoding type, and
to decode the image, which has been encoded according to the second encoding type; and

a display module configured to display the decoded image,
wherein the second encoding type is contrast dependent encoding (CDE) which is dependent on a contrast of the image.

9. The image processing apparatus of claim 8, wherein the first encoding type is encoding based on pentile processing.

10. The image processing apparatus of claim 9, wherein the pentile processing performed by the processor is performed by receiving, by the processor, red/green/blue (RGB) data regarding pixels of the image for gamma correction, and performing gamma correction with respect to the RGB data, converting the gamma-corrected RGB data into a sub pixel rendering (SPR) domain, and outputting the RGB data converted into the SPR domain.

11. The image processing apparatus of claim 8, wherein the encoding by the processor according to the second encoding type is performed by encoding, by the processor, the image based on at least one type of box filtering and truncation with respect to the pixel of the image.

12. The image processing apparatus of claim 11, wherein the encoding of the image by the processor based on the at least one type of box filtering and truncation is performed by encoding, by the processor, the image according to a mode in which a luminance error for sub pixels of the pixel, which is calculated based on at least one type of box filtering and truncation, is minimum.

13. The image processing apparatus of claim 8, wherein the processor is configured to further store the image encoded according to the second encoding type in a frame buffer.

14. The image processing apparatus of claim 8, further comprising a communication module configured to transmit the image encoded according to the second encoding type to another electronic device.

100

| APPLICATION | 124 |
| APPLICATION PROGRAMMING INTERFACE (API) | 123 |
| MIDDLEWARE | 122 |
| KERNEL | 121 |

ELECTRONIC DEVICE 101

IMAGE CONTROL MODULE 170

PROCESSOR 110

MEMORY 120

110

BUS

I/O INTERFACE 140

DISPLAY 150

COMMUNICATION INTERFACE 160

NETWORK 162

ELECTRONIC DEVICE 104

SERVER 106

FIG.1

200

IMAGE CONTROL MODULE

FIRST ENCODING MODULE — 202

SECOND ENCODING MODULE — 204

FRAME BUFFER — 206

DECODING MODULE — 208

COMMUNICATION MODULE — 210

# FIG.2

EP 2 955 712 A1

300

310

AP

DDIC

308

312

302

304

306

314

316

| IMAGE PROCESSING MODULE | PENTILE PROCESSING MODULE | CDE PROCESSING MODULE | Tx | Rx | FRAME BUFFER | DECODING MODULE |

DATA LINE (DL)

. . . .

320 — DISPLAY MODULE

FIG.3

START

PERFORM IMAGE SIGNAL PROCESSING ON
ENCODING-TARGET IMAGE — S400

ENCODE IMAGE ACCORDING TO
FIRST ENCODING TYPE — S410

ENCODE ENCODED IMAGE
ACCORDING TO SECOND ENCODING TYPE — S420

STORE IMAGE ENCODED ACCORDING TO
SECOND ENCODING TYPE IN FRAME BUFFER — S430

DECODE IMAGE STORED IN FRAME BUFFER — S440

DISPLAY DECODED IMAGE — S450

END

FIG.4

START

RECEIVE RGB DATA OF PIXELS — S500

PERFORM GAMMA CORRECTION ON
RECEIVED RGB DATA — S510

CONVERT CORRECTED RGB DATA INTO SPR DOMAIN — S520

OUTPUT RGB DATA CONVERTED INTO SPR DOMAIN — S530

END

FIG.5

Input line n

A_r

R   A_g   G

C_b

B   C_g   G

Input line n+1

D_r

R   D_g   G

B_r

B   B_g   G

## FIG.6A

E_r [7:1], OP0

E_g [7:0]

# R, G, B, G

F_b [7:1], OP1

F_g [7:0]

## FIG.6B

A_r [7:0]
A_g [7:0]

B_r [7:0]
B_g [7:0]

{ Trunc (A_r), Trunc (B_r) }
{ Trunc (A_g), Trunc (B_g) }

Box (A_r, B_r)
Box (A_g, B_g)

MUX
1
0
OP0

E_r [7:0]
E_g [7:0]

E_r [7:1], OP0
E_g [7:0]

C_b [7:0]
C_g [7:0]

D_b [7:0]
D_g [7:0]

{ Trunc (C_b), Trunc (D_b) }
{ Trunc (C_g), Trunc (D_g) }

Box (C_b, D_b)
Box (C_g, D_g)

MUX
1
0
OP1

F_b [7:0]
F_g [7:0]

F_b [7:1], OP1
F_g [7:0]

FIG.7

22

FIG.8

FIG.9

EP 2 955 712 A1

FIG.10

FIG.11

AP 1100
1102 Tx

DDIC 1110
1111 Rx
1112 PENTILE PROCESSING MODULE
1113 CDE PROCESSING MODULE
1114 FRAME BUFFER
1115 DECODING MODULE
1116 IMAGE PROCESSING MODULE

DATA LINE (DL)

1120 DISPLAY MODULE

48bit

1200          1210

A          B

# FIG.12A

96bit

1220        1230

A        B

1240        1250

C        D

# FIG.12B

96bit

1260    1270    1280    1290

A    B    C    D

# FIG.12C

**FIG.13**

1400 1410

1420 1430

FIG.14A

FIG.14B

FIG.14C

1440 1450

1460 1470

FIG.14D

FIG.14E

FIG.14F

FIG.14G

FIG.14H

FIG.14I

trunc

FIG.14J

trunc

FIG.14K

trunc

FIG.14L

FIG.14M

FIG.14N

trunc

FIG.14O

——— : Box

- - - - :Trunc

├──── 24 bit ────┤    ├──── 12 bit ────┤

6,7,6 BOX Format    4,4,4 trunc Format

{ OP [4:0], $R_{box}$ [7:2], $G_{box}$ [7:1], $B_{box}$ [7:2]    $R_{trunc}$ [7:4], $G_{trunc}$ [7:4], $B_{trunc}$ [7:4]

$R_{trunc}$ [7:4], $G_{trunc}$ [7:4], $B_{trunc}$ [7:4] }

4,4,4 trunc Format

├──── 12 bit ────┤

↓ Encoding

| 24 bit | 12 bit | 12 bit |
|---|---|---|

⟋ 1500

box          trunc

1510          1520

# FIG.15

FIG.16

FIG.17

FIG.18

Europäisches
Patentamt

European
Patent Office

Office européen
des brevets

# EUROPEAN SEARCH REPORT

Application Number

EP 15 17 1341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/024557 A1 (RHO NAM-SEOK [KR] ET AL) 1 February 2007 (2007-02-01) * figures 1-4 * * paragraphs [0003], [0015], [0031], [0066], [0067], [0084], [0088] - [0090], [0093], [0100] * | 1-14 | INV. G09G5/02 |
| X | US 2012/120043 A1 (CHO HWA HYUN [KR] ET AL) 17 May 2012 (2012-05-17) * figures 1-7 * * paragraphs [0071], [0079] - [0081], [0089] * | 1-14 | |
| A | US 2005/225562 A1 (HIGGINS MICHAEL F [US] ET AL) 13 October 2005 (2005-10-13) * figures 1, 13-16 * * paragraphs [0053], [0054], [0075], [0076] * | 3,10 | |
| | | | TECHNICAL FIELDS SEARCHED (IPC) |
| | | | G09G |

The present search report has been drawn up for all claims

| Place of search | Date of completion of the search | Examiner |
|---|---|---|
| The Hague | 7 October 2015 | Maciu, Emanoil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 17 1341

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2015

| Patent document cited in search report | | Publication date | Patent family member(s) | | Publication date |
|---|---|---|---|---|---|
| US 2007024557 | A1 | 01-02-2007 | CN | 1905621 A | 31-01-2007 |
| | | | EP | 1748405 A2 | 31-01-2007 |
| | | | JP | 2007041595 A | 15-02-2007 |
| | | | KR | 20070014862 A | 01-02-2007 |
| | | | US | 2007024557 A1 | 01-02-2007 |
| US 2012120043 | A1 | 17-05-2012 | CN | 102542969 A | 04-07-2012 |
| | | | DE | 102011086225 A1 | 14-06-2012 |
| | | | JP | 2012109970 A | 07-06-2012 |
| | | | KR | 20120052739 A | 24-05-2012 |
| | | | TW | 201223290 A | 01-06-2012 |
| | | | US | 2012120043 A1 | 17-05-2012 |
| US 2005225562 | A1 | 13-10-2005 | CN | 1938752 A | 28-03-2007 |
| | | | CN | 101329859 A | 24-12-2008 |
| | | | TW | I278826 B | 11-04-2007 |
| | | | US | 2005225562 A1 | 13-10-2005 |
| | | | WO | 2005104083 A2 | 03-11-2005 |

EPO FORM P0459

For more details about this annex : see Official Journal of the European Patent Office, No. 12/82